# EUROPÄISCHE PATENTSCHRIFT

(11) **EP 1 692 080 B1**
(45) Veröffentlichungstag und Bekanntmachung des Hinweises auf die Patenterteilung: **24.02.2010**
(21) Anmeldenummer: 04819694.3
(22) Anmeldetag: 29.11.2004
(51) Int. Cl.: C03B 23/207, C03B 23/09

(54) **VERFAHREN ZUR HERSTELLUNG EINES GLASKÖRPERS**
METHOD FOR THE PRODUCTION OF A GLASS MEMBER
PROCEDE DE PRODUCTION D'UN CORPS EN VERRE

(30) Priorität: 05.12.2003 DE 10357335
(43) Veröffentlichungstag der Anmeldung: 23.08.2006
(73) Patentinhaber: Endress+Hauser Conducta Gesellschaft für Mess- und Regeltechnik mbH, 70839 Gerlingen (DE)
(72) Erfinder: SCHOLZ, Katrin, 09627 Bobritzsch (DE); AURAS, Stefan, 09648 Mittweida (DE); HÄRTIG, Sven, 04643 Frankenhain (DE); VOIGTLÄNDER, Jens, 04736 Waldheim (DE)
(74) Vertreter: Andres, Angelika Maria
(86) Internationale Anmeldenummer: PCT/EP2004/053153
(87) Internationale Veröffentlichungsnummer: WO 2005/054141

(56) Entgegenhaltungen:
- US-A- 2 119 009
- US-A- 3 444 068
- US-A- 5 158 589
- US-B1- 6 568 218

## Beschreibung

Die Erfindung betrifft ein Verfahren zum Herstellen eines Glaskörpers, insbesondere eines Glaskörpers eines elektrochemischen Sensors, beispielsweise eines pH-Sensors oder eines anderen ionensensitiven Sensors.

Ein pH-Sensor zum Erfassen des pH-Werts eines Mediums umfasst gewöhnlich zwei koaxiale Glasrohre, wobei das äußere Glasrohr an dem medienberührenden Ende mit dem inneren Glasrohr verbunden ist, wodurch die medienseitige Öffnung des äußeren Glasrohrs verschlossen ist, und wobei das medienberührenden Ende des inneren Glasrohrs eine ionensensitive Glasmembran aufweist. In dem medienberührenden Endabschnitt des äußeren Rohrs ist zudem mindestens ein Diaphragma vorgesehen, über welches eine Elektrolytbrücke zwischen einer Referenzflüssigkeit in einer äußeren Kammer, welche zwischen dem inneren Glasrohr und dem äußeren Glasrohr gebildet ist, und einem den Sensor umgebenden Medium zu gewährleisten.

Die Herstellung der Glaskörper erfordert viel handwerkliche Arbeit und ist sehr aufwendig. Die Anmelderin hat ein Verfahren zur Herstellung des inneren Glasrohrs mit einer daran angeblasenen ionensensitiven Glasmembran automatisiert, wie in dem Deutschen Patent Nr. DE 10 116 075.5 und der Offenlegungsschrift Nr. DE 10 116 099 beschrieben ist. Die solchermaßen gefertigten Innenrohre werden mit einem äußeren Glasrohr zu einer so genannten Einstabmesskette kombiniert, indem in das medienseitige Ende des äußeren Glasrohrs ein durchbohrter poröser Stopfen aus PTFE eingesetzt wird, und das innere Glasrohr in die Bohrung des porösen Stopfens eingesetzt wird. Es gibt dagegen noch kein automatisches Fertigungsverfahren für den Glaskörper einer Einstabmessketteeinschließlich der ionensensitiven Membran mit einer Glasverbindung zwischen dem inneren Glasrohr und dem äußeren Glasrohr. Die Gründe sind hierfür sind zweifach. Erstens würde ein nachträgliches Verschmelzen des Endbereichs eines äußeren Glasrohrs mit dem Endbereichs eines inneren Glasrohrs, welches bereits mit einer ionensensitiven Membran versehen ist, die ionensensitive Membran gefährden. Zweitens ist es bisher nicht möglich, das äußere Glasrohr derart mit dem inneren Glasrohr zu verbinden, dass an dem Rand der verbleibenden Öffnung des inneren Glasrohrs eine ionensensitive Glasmembran mit einem automatisierten Verfahren gemäß der obigen Schutzrechte angeblasen werden kann.

U.S. Patent Nr. 3,444,068 offenbart eine Glaselektrodenanordnung nebst Herstellungsverfahren, bei der ein einzelner Glasring die Enden zweier koaxialer Glasrohre und einer ionensensitiven Membran dicht miteinander verbindet. Der Glasring und die Membran werden gebildet, indem eine Schmelze von dem ionensensitiven Glas an den Rand des Ringspalts zwischen den koaxialen Glasrohren und ein Tropfen davon über die Öffnung des inneren Rohres gebracht werden. Der Tropfen ist noch zur Membran auszublasen.

U.S. Patent Nr. 6,568,218 offenbart eine Vorrichtung zum Bearbeiten von Glasrohren, insbesondere zum Formen eines kegelstumpfartigen Endabschnitts, wobei die Vorrichtung eine Spindel zum Rotieren des Glasrohrs, Mittel zum Erwärmen des Glasrohrs und eine Form umfasst, und das erwärmte Glasrohr zum Ausbilden des kegelstumpfartigen Endabschnitts in die Form geschoben wird.

Es ist die Aufgabe der vorliegenden Erfindung ein Verfahren zur automatischen Fertigung eines Glaskörpers für eine Einstabmesskette bereitzustellen.

Die Aufgabe wird gelöst durch das Verfahren gemäß des unabhängigen Patentanspruchs 1.

Das erfindungsgemäße Verfahren zur Herstellung eines Glaskörpers für einen potentiometrischen Sensor umfasst die Schritte:

Beschicken einer ersten Spindel einer Glasdrehmaschine mit einem äußeren Glasrohr und einem inneren Glasrohr, wobei das äußere Glasrohr und das innere Glasrohr koaxial zueinander und zu einer Rotationsachse der ersten Spindel der Glasdrehmaschine angeordnet sind, das innere Glasrohr und das äußere Glasrohr jeweils ein medienseitiges Ende aufweisen, und die beiden medienseitigen Enden in einer definierten axialen Position zueinander positioniert werden; Beschicken einer zweiten Spindel mit einem Hilfsglasrohr, wobei die Rotationsachse der zweiten Spindel koaxial zu der Rotationsachse der ersten Spindel, angeordnet ist; Annähern des Hilfsglasrohrs an das äußere Glasrohr; Verschmelzen des äußeren Glasrohrs mit dem Hilfsglasrohr; Erzeugen einer Verbindung zwischen dem äußeren Glasrohr bzw. dem Hilfsglasrohr und dem inneren Glasrohr ; Abziehen eines Hilfsglasrohrrests; Erzeugen einer medienseitigen Öffnung des inneren Glasrohrs; und Formen eines medienseitigen Rands der Öffnung. Optional umfasst das Verfahren weiterhin das automatische Anblasen einer Glasmembran an dem medienseitigen Rand.

Die beschriebenen Schritte werden vorzugsweise alle automatisch durchgeführt.

Zur Durchführung des erfindungsäemäßen Verfahrens ist eine Vorrichtung mit einer Glasdrehmaschine und mindestens eine elektronische Datenverarbeitungseinrichtung vorgesehen, die mit mehreren Sensoren und Steuerungen kommuniziert.

Die Vorrichtung umfasst eine Kamera zur Überwachung geometrischer Parameter wie der Zentrierung der Glasrohre, deren axialer Position und zumindest den den Durchmesser des äußeren Glasrohrs erfasst. Die Kamera ist mit der elektronischen Datenverarbeitungsanlage verbunden, die eine digitale Bildverarbeitung durchführt.

Die Datenverarbeitungsanlage kommuniziert mit den Steuerungen der Antriebe der ersten und der zweiten Spindel. Die Spindeln werden zum Verbinden des Hilfsglasrohrs mit den anderen Rohren in gleichsinnige Rotation versetzt, wobei derzeit zudem eine identische Drehzahl für beide Spindeln bevorzugt ist. Die Drehzahl der Spindeln während der Bearbeitung kann einige 100 U/min, beispielsweise 200 bis 300 U/min betragen.

Weiterhin kommuniziert die Datenarbeitungsanlage mit einer Steuerungsvorrichtung für einen Brenner. Die Steuerungsvorrichtung steuert einerseits das Gasgemisch mit dem der Brenner gespeist wird, vorzugsweise eine Zündvorrichtung, sowie die Position des Brenners und dessen Winkel bezüglich der Achse der Spindeln.

Die Temperatur der zu bearbeitenden Glasabschnitte ist ein wesentliches Kriterium für die Steuerung des Brenners, sie wird mittels eines Pyrometers erfasst, welches ebenfalls mit der zentralen Datenverarbeitungsanlage kommuniziert. Die Bearbeitungstemperatur kann beispielsweise etwa 800°C bis 900°C betragen.

Eine Blasleitung kommuniziert mit dem inneren und dem äußeren Glasrohr über deren medienabgewandtes Ende. Der Blasdruck in der Blasleitung wird vorzugsweise ebenfalls mittels der zentralen Datenverarbeitungsanlage gesteuert.

Das dem äußeren Glasrohr und dem inneren Glasrohr abgewandte Ende des Hilfsglasrohrs ist während des Verfahrens vorzugsweise druckdicht verschlossen.

Die Vorrichtung umfasst vorzugsweise ebenfalls weiterhin einen automatisch positionierbaren Werkzeugträger der ebenfalls von der zentralen Datenverarbeitungsanlage gesteuert wird. Der Werkzeugträger kann ein hitzebeständiges Werkzeug tragen, welches beispielsweise einen keramischen Werkstoff oder einen Kohlefaserwerkstoff aufweist, wobei mit dem Werkzeug der Rand der medienseitigen Öffnung geformt werden kann.

Vorzugsweise sind zudem automatische Manipulatoren, beispielsweise Greifvorrichtungen vorgesehen, mit denen die Glasrohre aus Magazinen entnommen werden, und die Spindeln beschickt werden. Zudem werden die Glaskörper nach dem Formen der medienseitigen Öffnung bevorzugt mittels eines automatischen Manipulators aus der Glasdrehbank entnommen und direkt, oder über ein Magazin an eine Vorrichtung zum Anblasen der Membran übergeben.

Das Erfindungagemäße Verfahren und die Vorrichtung werden nun anhand eines in der Figur dargestellten Ausführungsbeispiels beschrieben.

Es zeigt:

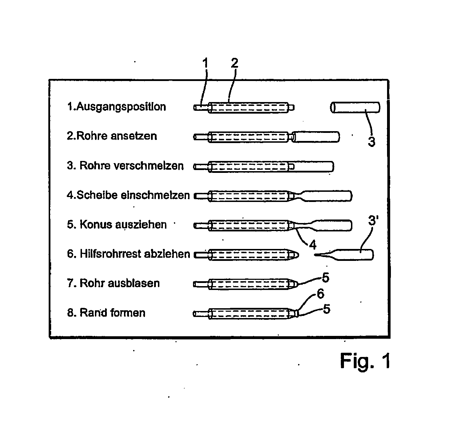

Fig. 1. Eine schematische Längsschnitte durch einen Glaskörper während der verschiedenen Bearbeitungsstufen nach einer Ausgestaltung des dem erfindungsgemäßen Verfahrens.

Hinsichtlich der dargestellten Ausgestaltung des Verfahrens ist zu den einzelnen Verfahrensschritten das folgende anzumerken. Bei Beschicken der ersten und zweiten Spindeln mit den Glasrohren ist vorzugsweise jeweils ein definierter axialer Anschlag für die Rohre vorgegeben, um die axiale Position der Rohre zueinander festzulegen. Das äußere Glasrohr 2 und das innere Glasrohr 1 müssen zudem hinsichtlich der Spindelachse der ersten Spindel zentriert sein. Die Überwachung der Zentrierung erfolgt durch die Kamera, die mit der elektronischen Datenverarbeitungsanlage verbunden ist, die eine digitale Bildverarbeitung durchführt. Mittels der Kamera und der Bildverarbeitung wird zudem die axiale Position der medienseitigen Rohrenden des inneren und äußeren Glasrohres erfasst. Weiterhin wird der der Rohrdurchmesser erfasst.

Beim Annähern des Hilfsglasrohrs 3 an das äußere Glasrohr 2 wird das Hilfsglasrohr 3 vorzugsweise zunächst auf einen Abstand von etwa 1 mm an das äußere Glasrohr herangefahren. Dann werden die Glassrohre mittels des Brenners hinreichend erhitzt, dass sie miteinander verschmolzen werden können.

Zum Verschmelzen des Hilfsglasrohrs mit dem äußeren Glasrohr wird das Hilfsglasrohr ganz an das äußere Glasrohr herangefahren. Ggf. wird die Verbindung der Glasrohre sogar etwas axial gestaucht und anschließend wieder gestreckt. Das Stauchen und Strecken kann ggf. auch mehrfach wiederholt werden, um eine homogene Verbindung zu erzielen. Zum Einstellen des Durchmessers der Verbindungsstelle kann mittels der Blasleitung der Luftdruck in den Glasrohren kontrolliert werden.

In einer Weiterbildung des Verfahrens weist das äußere Glasrohr in seinem medienseitigen Endabschnitt mindestens ein keramisches Diaphragma auf, welches beispielsweise in die medienseitigen Stirnseite zumindest teilweise eingeschmolzen sein kann. Zur Erleichterung des Einschmelzens ist es derzeit bevorzugt, dass zumindest ein Abschnitt einer Mantelfläche der keramischen Membranelemente eine Beschichtung aus Glas aufweist, mit welcher das Diaphragma auf der Stirnseite eingeschmolzen sein kann. Durch das Verschmelzen des Hilfsglasrohres mit dem äußeren Rohr wird das Diaphragma dann in das entsteliende Außenrohr des Glaskörpers integriert.

Zum Erzeugen einer Verbindung zwischen dem Außenrohr, bestehend aus dem äußeren Glasrohr und dem Hilfsglasrohr und dem inneren Glasrohr wird das Außenrohr solchermaßen in einem Abschnitt erwärmt und in Richtung der Hilfsglasro hrspindel in die Länge gezogen, dass sich der Durchmesser in dem erwärmten Abschnitt so weit verringert dass der Abschnitt des Außenrohrs mit dem medienseitigen Rand des Innenrohrs verbunden und verschmolzen wird. Zur Homogenisierung der Verbindung sind Stauchungen und Streckungen um die angestrebte Endlage möglich, wobei zur Kontrolle des Durchmessers der Luftdruck mittels der Blasleitung einstellbar ist.

In dieser Ausgestaltung weist das innere Glasrohr an seinem medienseitigen Ende eine teller- bzw. scheibenförmige radiale Aufweitung auf, welche die Verbindung zum Außenrohr erleichtert.

In dieser Ausgestaltung des Verfahrens wird anschließend ein Konus 4 ausgebildet, indem ein Abschnitt des Außenrohrs, welcher medienseitig von der Verbindung zwischen dem inneren Glasrohr und dem Außenrohr axial beabstandet ist, mit einer breiten Flamme oder einem schwenkenden Brenner erwärmt und axial in die Länge gezogen wird.

Zum Abziehen des Hilfsglasrohrrests 3' wird eine axial begrenzter Trennabschnitt mit einer schmalen Flamme erwärmt und in die Länge gezogen, bis die Verbindung zwischen den Teilen des Außenrohrs am Trennabschnitt reißt.

Insofern, als die medienseitige Öffnung des Rohres nach dem Abziehen des Hilfsglasrohres verschlossen ist, muss zur Wiederherstellung der medienseitigen Öffnung 5 das Rohr ausgeblasen werden. Hierzu wird der verschlossene Endbereich in einem begrenzten axialen Abschnitt erwärmt.

Zum Formen des Randes 6 der medienseitigen Öffnung wird ein hitzebeständiges Werkzeug an den geschmolzenen Rand 6 der Öffnung gefahren, wobei das Werkzeug eine Kontur bereitstellt um den Rand 6 der Öffnung zu formen.

Während die Zwischenschritte nach der anfänglichen Positionierung und Zentrierung der Rohre sowohl kameraüberwacht als auch "blind" nach einem gespeicherten Programmablauf ohne Kontrolle über Bildverarbeitung erfolgen können, ist es derzeit bevorzugt, dass beim Formen des Randes eine Überwachung und Steuerung dieses Prozess-Schrittes auf Grundlage der Kameraüberwachung erfolgt. Auf diese Weise kann eine gleich bleibende Qualität der Ränder erzielt werden, welche für das automatische Anblasen der Glasmembranen erforderlich ist.

Hinsichtlich der Einzelheiten des Anblasens der Glasmembran wird auf Lehre der obigen Schutzrechte der Anmelderin verwiesen. Im Prinzip wird dazu der Glaskörner bestehend aus dem inneren Glasrohr und dem äußeren Glasrohr mit dem medienseitige Rand auf die Oberfläche einer Glasschmelze aufgesetzt; dann wird der Glaskörper angehoben, wobei ein Film aus Glasschmelze, der von dem medienseitigen Rand aufgespannt wird, die medienseitige Öffnung verschließt. Dann wird mittels eines vorgegebenen Druckverlaufs, eine Glasmembran aus dem Film geblasen.

Gegebenenfalls wird der Gaskörper nach dem Formen des medienseitigen Randes und vor dem Anblasen der Membran von der Glasdrehmaschine entfernt, und eine Vorrichtung zum Anblasen der Membran wird mit dem Glaskörper beschickt, damit das Anblasen der Membran erfolgen kann.

## Patentansprüche

1. Verfahren zur automatischen Herstellung eines Glaskörpers für einen potentiometrischen Sensor umfassend:
Beschicken einer ersten Spindel einer Glasdrehmaschine mit einem äußeren Glasrohr (2) und einem inneren Glasrohr (1), wobei das äußere Glasrohr (2) und das innere Glasrohr (1) koaxial zueinander und zu einer Rotationsachse der ersten Spindel der Glasdrehmaschine angeordnet werden, das innere Glasrohr und das äußere Glasrohr jeweils ein medienseitiges Ende aufweisen, und die beiden medienseitigen Enden in einer definierten axialen Position zueinander positioniert werden;
Beschicken einer zweiten Spindel mit einem Hilfsglasrohr (3), wobei die Rotationsachse der zweiten Spindel koaxial zu der Rotationsachse der ersten Spindel, angeordnet ist;
Annähern des Hilfsglasrohrs (3) an das äußere Glasrohr (2); Verschmelzen des äußeren Glasrohrs (2) mit dem Hilfsglasrohr (3) zu einem Außenrohr;
Erzeugen einer Verbindung zwischen dem Außenrohr, bestehend aus dem äußeren Glasrohr (2) und dem Hilfsglasrohr (3) und dem inneren Glasrohr (1),
Abziehen eines Hilfsglasrohrrests (3) von dem Außenrohr;
Erzeugen einer medienseitigen Öffnung (5) des inneren Glasrohrs (1); und
Formen eines medienseitigen Rands (6) der Öffnung (5).

2. Verfahren nach Anspruch 1, wobei an den geformten medienseitigen Rand (6) der Öffnung (5) automatisch eine Glasmembran angeblasen wird.

3. Verfahren nach Anspruch 1 oder 2, wobei das innere Glasrohr an seinem medienseitigen Ende eine teller- oder scheibenartige radiale Aufweitung aufweist.

4. Verfahren nach einem der Ansprüche 1 bis 3, wobei nach dem Erzeugen einer Verbindung zwischen dem Außenrohr, und vor dem Abziehen des Hilfsglasrohrrests (3') von dem Außenrohr; ein Konus an dem medienseitigen Ende des Außenrohrs geformt wird.

5. Verfahren nach einem der vorhergehenden Ansprüche, wobei das Erzeugen der medienseitigen Öffnung das Ausblasen des inneren Glasrohrs (1) umfasst.

6. Verfahren nach einem der vorhergehenden Ansprüche, wobei das Formen des Randes (6) der medienseitigen Öffnung (5) mittels eines Werkzeuges erfolgt, welches eine keramischen Werkstoff oder ein Kohlefasermaterial aufweist.

7. Verfahren nach einem der vorhergehenden Ansprüche, wobei das Formen des Rands (6) der medienseitigen Öffnung (5), mittels einer Kamera und digitaler Bildverarbeitung überwacht und gesteuert wird.

8. Verfahren nach einem der vorhergehenden Ansprüche, wobei das äußere Glasrohr (2) in seinem medienseitigen Endabschnitt mindestens ein keramisches Diaphragma aufweist, welches in die medienseitigen Stirnseite zumindest teilweise eingeschmolzen ist.

9. Verfahren nach Anspruch 8, wobei ein Abschnitt einer Mantelfläche der keramischen Membranelemente eine Beschichtung aus Glas aufweist, mit welcher das Diaphragma in die Stirnseite eingeschmolzen ist.

## Claims

1. Method for the automatic creation of a glass body for a potentiometric sensor, comprising:
Loading a first spindle of a glass lathe with an outer glass tube (2) and an inner glass tube (1), whereby the outer glass tube (2) and the inner glass tube (1) are arranged coaxially towards one another and to a axis of rotation of the first spindle of the glass lathe, the inner glass tube and the outer glass tube each exhibit an end at the medium side, and the two medium-side ends are positioned at a defined axial position towards one another;
Loading a second spindle with an auxiliary glass tube (3), whereby the axis of rotation of the second spindle is coaxially arranged to the axis of rotation of the first spindle;
Approximating the auxiliary glass tube (3) with the outer glass tube (2); Melting the outer glass tube (2) into the auxiliary glass tube (3) to form an outer tube;
Creating a connection between the outer tube, consisting of the outer glass tube (2) and the auxiliary glass tube (3) and the inner glass tube;
Removing the remains of the auxiliary glass tube (3') from the outer tube;
Creating an opening (5), located on the medium side, of the inner glass tube (1);
Forming an edge (6), on the medium side, of the opening (5).

2. Method as per Claim 1, whereby a glass membrane is automatically formed on the molded edge (6), on the medium side, of the opening (5).

3. Method as per Claim 1 or 2, whereby the inner glass tube exhibits a plate-like or discoid radial expansion at its end on the medium side.

4. Method as per one of the Claims 1 to 3 where a taper is formed at the medium end of the outer tube after generating a connection between the outer tube and before removing the auxiliary glass tube remains (3') from the outer tube.

5. Method as per one of the previous claims, whereby the creation of the opening on the medium side comprises blowing out the inner glass tube (1).

6. Method as per one of the previous claims, whereby the edge (6) of the opening (5) on the medium side is formed using a tool which exhibits a ceramic material or a carbon fiber material.

7. Method as per one of the previous claims, whereby the creation of the edge (6) of the opening (5) on the medium side is monitored and controlled by a camera and digital image processing.

8. Method as per one of the previous claims, whereby the outer glass tube (2) exhibits at least a ceramic membrane at the end section on the medium side, said membrane being melted, at least in part, into the front face on the medium side.

9. Method as per Claim 8, whereby one section of a shell of the ceramic diaphragm elements exhibits a glass coating with which the membrane is melted into the front face.

## Revendications

1. Procédé destiné à la fabrication automatique d'un corps en verre pour un capteur potentiométrique, comprenant :
L'alimentation d'une première broche d'un tour à verre avec un tube de verre extérieur (2) et un tube de verre intérieur (1), le tube de verre extérieur (2) et le tube de verre intérieur (1) étant disposés coaxialement l'un par rapport à l'autre et par rapport à un axe de rotation de la première broche du tour à verre, le tube de verre intérieur et le tube de verre extérieur présentant chacun une extrémité côté produit, et les deux extrémités côté produit étant positionnées dans une position axiale définie ;
L'alimentation d'une deuxième broche avec un tube de verre auxiliaire (3), l'axe de rotation de la deuxième broche étant disposée coaxialement par rapport à l'axe de rotation de la première broche ;
L'approche du tube de verre auxiliaire (3) vers le tube de verre extérieur (2) ; la fusion du tube de verre extérieur (2) avec le tube de verre auxiliaire (3) en un tube extérieur ;
La génération d'une liaison entre le tube extérieur, composé du tube de verre extérieur (2) et du tube de verre auxiliaire (3) et du tube de verre intérieur (1).
Le retrait d'un reste de tube de verre auxiliaire (3') du tube extérieur ;
La génération d'une ouverture (5) côté produit du tube de verre intérieur (1) ; et
Le formage d'un bord (6) côté produit de l'ouverture (5).

2. Procédé selon la revendication 1, pour lequel une membrane de verre est soufflée automatiquement sur le bord (6) formé côté produit de l'ouverture (5).

3. Procédé selon la revendication 1 ou 2, pour lequel le tube de verre intérieur présente en son extrémité située côté produit un évasement radial en forme de plateau ou de disque.

4. Procédé selon l'une des revendications 1 à 3, pour lequel un cône est formé à l'extrémité située côté produit du tube extérieur après la génération d'une liaison entre le tube extérieur et avant le retrait du reste de tube de verre auxiliaire (3') du tube extérieur.

5. Procédé selon l'une des revendications précédentes, pour lequel la génération de l'ouverture côté produit comprend le soufflage du tube de verre intérieur (1).

6. Procédé selon l'une des revendications précédentes, pour lequel le formage du bord (6) de l'ouverture (5) côté produit est réalisé au moyen d'un outil composé d'un matériau céramique ou d'un matériau en fibre de carbone.

7. Procédé selon l'une des revendications précédentes, pour lequel le formage du bord (6) de l'ouverture (5) côté produit est surveillé et commandé au moyen d'une caméra et d'un système numérique de traitement d'images.

8. Procédé selon l'une des revendications précédentes, pour lequel le tube de verre extérieur (2) présente au niveau de sa partie extrême, située côté produit, au moins un diaphragme céramique, lequel est incorporé par fusion au moins partiellement dans la face frontale côté produit.

9. Procédé selon la revendication 8, pour lequel une partie de la surface latérale des éléments de membrane céramiques présente un revêtement en verre, avec lequel le diaphragme est incorporé par fusion dans la face frontale.
